# EUROPÄISCHE PATENTANMELDUNG

(11) **EP 0 575 652 A1**
(43) Veröffentlichungstag der Anmeldung: **29.12.1993**
(21) Anmeldenummer: 92110692.8
(22) Anmeldetag: 26.06.1992
(51) Int. Cl.: F16H 1/32

(54) **Untersetzungsgetriebe**

(71) Anmelder: FALKNER, Raimund, A-6426 Roppen Nr. 64 (AT)
(72) Erfinder: FALKNER, Raimund, A-6426 Roppen Nr. 64 (AT)
(74) Vertreter: Torggler, Paul, Dr.

(57) **Zusammenfassung**

Bei einem Untersetzungsgetriebe ist einem auf einer Antriebswelle (1) konzentrisch angeordneten Antriebsrad (2) und einem auf einer koaxialen Abtriebswelle (13) ebenfalls konzentrisch angeordneten Abtriebsrad (14) ein Zwischenring (9) zugeordnet, der exzentrisch kreisend im Eingriff mit dem Abtriebsrad (14) gehalten ist. Mindestens ein in das Antriebsrad (2) und den Zwischenring (9) eingreifendes Planetenrad (5) steht über den Umfang des Abtriebsrades (14) nach außen vor und bewirkt eine zusätzliche Untersetzung zwischen dem Antriebsrad (2) und dem Zwischenring (9).

## Beschreibung

Die Erfindung betrifft ein Untersetzungsgetriebe mit einer Antriebswelle und mit einer koaxialen Abtriebswelle, mit einem auf der Antriebswelle angeordneten Antriebsrad, mit einem auf der Abtriebswelle angeordneten Abtriebsrad, das nach außen gerichtete Übertragungselemente aufweist, mit einem mit beiden Rädern zusammenwirkenden Zwischenring, der nach innen gerichtete Übertragungselemente aufweist und exzentrisch kreisend im Eingriff mit dem Abtriebsrad rotationsfrei gehalten ist.

Ein derartiges Untersetzungsgetriebe ist - eingebaut in eine Seilwinde - beispielsweise der US-PS 2 495 811 zu entnehmen. Das Abtriebsrad stellt einen Flansch der Seiltrommel dar und ist mit einem Außenzahnkranz versehen, in den ein Innenzahnkranz des exzentrisch kreisenden Zwischenringes eingreift. Dessen Antrieb erfolgt über das auf der Antriebswelle exzentrisch angeordnete Antriebsrad, auf dem der Zwischenring drehbar gelagert ist. Der exzentrisch kreisende Zwischenring ist über einen radial abstehenden, gleitend und drehbar gelagerten Arm verdrehfest am Gehäuse gehalten. Das Untersetzungsverhältnis wird durch die Differenz der Zähnezahlen des Abtriebsrades und des Zwischenringes bestimmt.

Die Erfindung hat es sich nun zur Aufgabe gestellt, ein Untersetzungsgetriebe zu schaffen, in dem bei gleichen Raddurchmessern bzw. Zahnzahlen ein höheres Untersetzungsverhältnis erzielbar ist.

Erfindungsgemäß wird dies dadurch erreicht, daß das Antriebsrad konzentrisch auf der Antriebswelle angeordnet und mit nach außen gerichteten Übertragungselementen versehen ist, und daß mindestens ein in die Übertragungselemente des Antriebsrades und des Zwischenringes eingreifendes Planetenrad vorgesehen ist, das über den Umfang des Abtriebsrades nach außen vorsteht. An der dem Eingriffsbereich zwischen dem Zwischenring und dem Abtriebsrad diametral gegenüberliegenden Seite, also in Richtung des gemeinsamen Radius des Antriebsrades und des Zwischenringes, weist der Zwischenring aufgrund der Exzentrizität den größten Abstand zum Antriebsrad auf, sodaß ein einzelnes an dieser Stelle eingesetztes Planetenrad den größtmöglichen Überstand aufweist und damit in seiner Position festgelegt ist. Da sich der Abstand des Zwischenringes zum Antriebsrad von dieser Stellung aus nach beiden Seiten verkleinert, können symmetrisch zum gemeinsamen Radius auch zwei Planetenräder vorgesehen werden, wobei der überstand mit zunehmendem Symmetriewinkel geringer wird. Wird die Antriebswelle angetrieben, so rollt jedes Planetenrad zwischen dem Antriebsrad und dem Zwischenring ab. Durch den überstand des Planetenrades über das Abtriebsrad wird die Funktion einer Nocke bzw. eines Exzenters erreicht, und der Zwischenring wird vom Planetenrad in Drehrichtung der Antriebswelle fortlaufend nach außen verdrängt und durch die rotationsfreie Halterung exzentrisch kreisend. Die Antriebswelle ist durch den Wegfall eines Exzenters ausgewuchtet und zusätzlich ist zwischen der Antriebswelle und dem Zwischenring eine Untersetzung gegeben, sodaß die Gesamtuntersetzung vergrößert wird. Eine vorteilhafte Ausführung ist dabei dann gegeben, wenn die beiden Planetenräder einander diametral gegenüberliegend angeordnet sind und jeweils etwa den halben Überstand aufweisen. Dadurch sind die unwuchtigen Getriebeteile auf den Zwischenring beschränkt, da damit auch die beiden Planetenräder gleichmäßig verteilt sind.

Eine erste Ausführung, die sich vor allem für die Verwendung eines einzigen Planetenrades eignet, sieht vor, daß das Antriebsrad und der Zwischenring U- oder V-förmige Nuten aufweisen, und jedes Planetenrad einen in die Nuten eingreifenden Umfangssteg aufweist.

Eine weitere Ausführung, die sich vor allem für die Verwendung von zwei Planetenrädern eignet, sieht vor, daß alle Übertragungselemente Verzahnungen aufweisen.

Die Planetenräder sind bevorzugt lose eingelegt und sind weder auf einem Träger noch auf Lagerachsen angeordnet, sodaß das Getriebe einen extrem einfachen Aufbau aufweist. Die Anordnung eines Trägers, der auf der Antriebswelle drehbar gelagert ist, ist jedoch ebenso möglich. Werden nur ein einziges Planetenrad oder zwei nicht diametral gegenüber angeordnete Planetenräder verwendet, so kann der Träger auch als Massenausgleich für die Planetenräder dienen und entsprechend geformt sein. Eine besonders preisgünstige Herstellung des Untersetzungsgetriebes ergibt sich dann, wenn die Verzahnungen des Antriebsrades und des Zwischenringes durch geschlossene Rollenketten gebildet sind, und das Abtriebsrad sowie jedes Planetenrad als Kettenzahnräder ausgebildet sind. Untersetzungsgetriebe mit unterschiedlichen Untersetzungsverhältnissen trotz gleicher Außendimensionen des Zwischenringes und des Abtriebsrades lassen sich dadurch erreichen, daß das Antriebsrad austauschbar auf der Antriebswelle befestigt ist und verschiedene Größen von Antriebsrädern und zugehörigen Planetenrädern zur Verfügung stehen. Wesentlich dabei ist, daß die Summe aus dem Radius des Antriebsrades und des Durchmessers des Planetenrades konstant ist.

Nachstehend werden nun zwei Ausführungsbeispiele der Erfindung anhand der Figuren der beiliegenden Zeichnungen näher beschrieben, ohne darauf beschränkt zu sein.

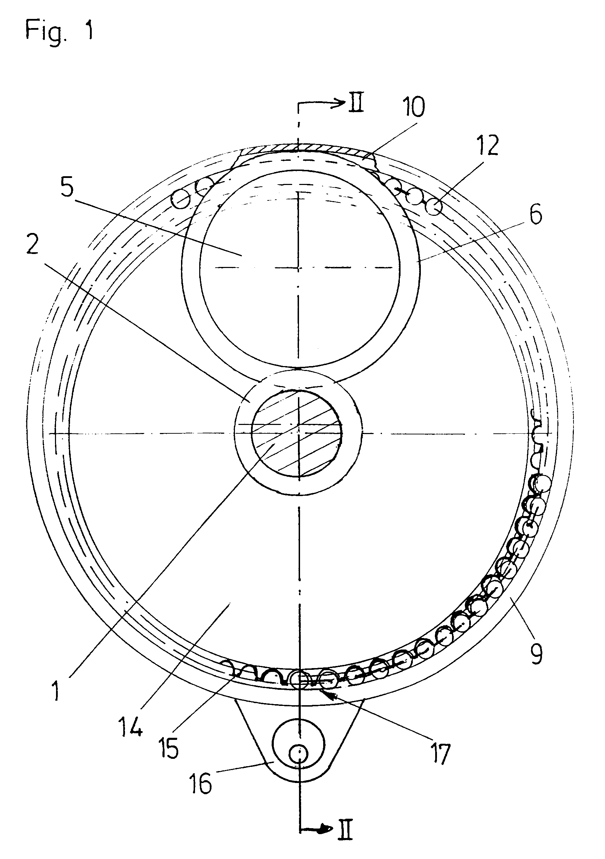

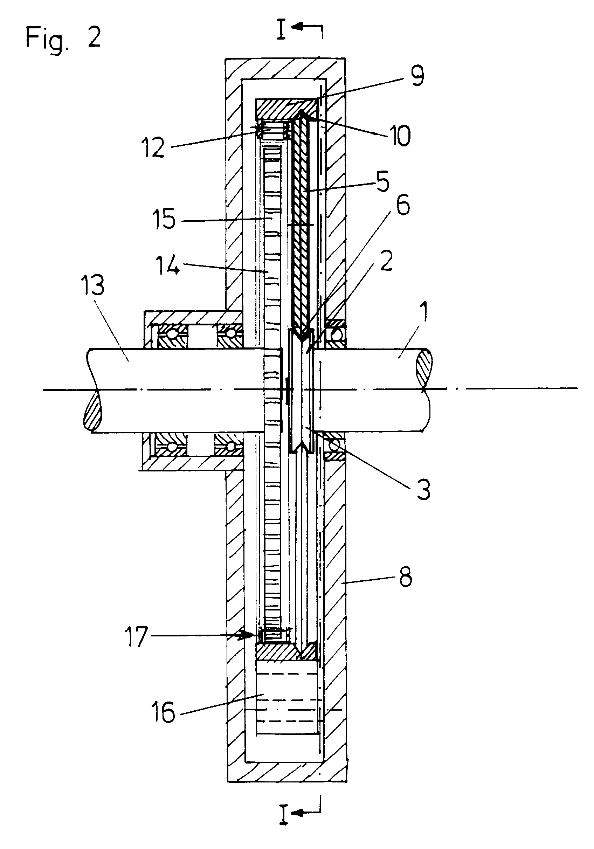

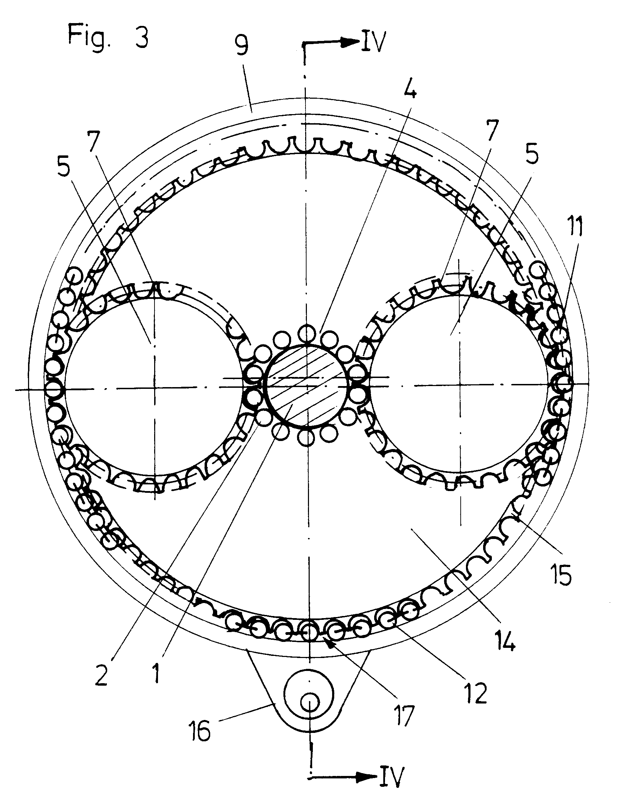

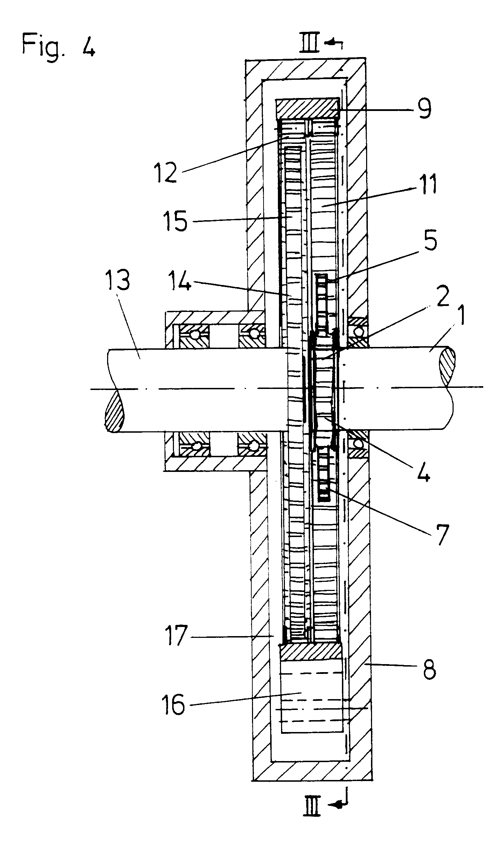

Die Fig. 1 und 2 zeigen einen Radial- und einen Axialschnitt durch eine erste Ausführung und die Fig. 3 und 4 gleiche Schnitte durch eine zweite Ausführung.

Ein Untersetzungsgetriebe weist eine Antriebswelle 1 und eine koaxiale Abtriebswelle 13 auf, die jeweils in einem Gehäuse 8 gelagert sind. Auf der Antriebswelle 1 ist gegebenenfalls austauschbar ein Antriebsrad 2 zentrisch und verdrehfest angeordnet bzw. ausgebildet, das nach außen gerichtete Übertragungselemente aufweist. Ebenfalls mit äußeren Übertragungselementen ist ein Abtriebsrad 14 ausgestattet, das zentrisch und verdrehfest auf der Abtriebswelle 13 angeordnet ist. Die beiden Räder 2, 14 werden von einem Zwischenring 9 umgeben, dessen Durchmesser größer als der des Abtriebsrades 14 ist und der exzentrisch zu den beiden Wellen 1, 13 angeordnet ist. Über den Umfang verteilte Führungen 16, von denen nur eine dargestellt ist, halten den Zwischenring 9 rotationsfrei im Gehäuse 8, erlauben jedoch eine kreisende Bewegung im Ausmaß seiner Exzentrizität, die einen entlang des Umfangs des Abtriebsrades 14 wandernden Eingriffsbereich 17 bewirkt. Die kreisende Bewegung des Zwischenringes 9 wird über mindestens ein in das Antriebsrad 2 eingreifendes Planetenrad 5 herbeigeführt, das auch in den Zwischenring 9 eingreift und über den Umfang des Abtriebsrades 14 vorsteht. Bei Drehung der Antriebswelle 1 läuft jedes Planetenrad 5 aufgrund seiner Eingriffe in das Antriebsrad 2 und den Zwischenring 9 auf einer Kreisbahn um die Antriebswelle 1 und drängt dabei den Zwischenring 9 jeweils nach außen, sodaß der Eingriffsbereich 17 wandert. Da der Umfang des Antriebsrades 2 kleiner als der Innenumfang des Zwischenringes 9 ist, ergibt sich zwischen dem Antriebsrad 2 und dem Zwischenring 9 eine erste Untersetzungsstufe. Die Größe der Untersetzung kann dabei durch geeignete Auswahl des Antriebsrades 2 und des Planetenrades 5 bzw. der Planetenräder 5 bestimmt werden. Da weiters der Innenumfang des Zwischenringes 9 größer als der Umfang des Abtriebsrades 14 ist, bewirkt die kreisende Bewegung des Zwischenringes 9 ein Abrollen des Abtriebsrades 14 im Zwischenring 9 und damit eine weitere Untersetzungsstufe. Dank des Planetenrades 5 sind dabei die Drehrichtungen der Antriebswelle 1 und der Abtriebswelle 2 gleich.

In den Fig. 1 und 2 ist ein einziges Planetenrad 5 durch eine Scheibe mit dem in Richtung des gemeinsamen Radius des Antriebsrades 2 und des Zwischenringes 9 größtmöglichen Durchmesser gebildet, die einen beidseitig abgeschrägten Umfangssteg 6 aufweist. Die zugehörigen Übertragungselemente des Antriebsrades 2 und des Zwischenringes 9 bestehen jeweils aus einer U- oder V-förmigen Nut 3, 10, in die der gegengleich geformte Umfangssteg 6 des Planetenrades 5 eingreift. Die zweite Reihe von Übertragungselementen an der Innenseite des Zwischenringes 9 umfaßt eine durch eine geschlossene Rollenkette gebildete Verzahnung 12, in die die Zähne 15 des als Kettenzahnrad ausgebildeten Abtriebsrades 14 im Bereich 17 eingreifen, der dem Planetenrad 5 diametral gegenüberliegt.

In der Fig. 3 und 4 sind zwei Planetenräder 5 vorgesehen, die im Vergleich zum einzigen Planetenrad 5 der Fig. 1 und 2 einen jeweils um die halbe Exzentrizität geringeren Durchmesser aufweisen und symmetrisch zum gemeinsamen Radius einander diametral gegenüberliegend angeordnet sind. Als Übertragungselemente sind in dieser Ausführung überall Verzahnungen 4,7,11,12,15 vorgesehen. So ist das Antriebsrad 2 von einer Rollenkette umschlossen und im Zwischenring 9 sind zwei einzelne Rollenketten oder eine Doppelrollenkette angeordnet. Dementsprechend sind beide Planetenräder 5 sowie das Abtriebsrad 14 als Kettenzahnräder ausgebildet.

Die Planetenräder 5 sind lose zwischen das Antriebsrad 2 und den Zwischenring 9 eingelegt und benötigen weder einen Träger noch Lagerachsen. Es ist jedoch möglich, auf der Antriebswelle 1 frei drehbar einen Planetenradträger vorzusehen, auf dem jedes Planetenrad 5 frei drehbar gelagert ist. In der Ausführung nach Fig. 1 und 2 kann ein Planetenradträger auch als Massenausgleich eingesetzt werden, was in der Ausführung nach den Fig. 3 und 4 nicht erforderlich ist.

## Patentansprüche

1. Untersetzungsgetriebe mit einer Antriebswelle (1) und mit einer koaxialen Abtriebswelle (13), mit einem auf der Antriebswelle (1) angeordneten Antriebsrad (2), mit einem auf der Abtriebswelle (13) angeordneten Abtriebsrad (14), das nach außen gerichtete Übertragungselemente aufweist, mit einem mit beiden Rädern (2,14) zusammenwirkenden Zwischenring (9), der nach innen gerichtete Übertragungselemente aufweist und exzentrisch kreisend im Eingriff mit dem Abtriebsrad (14) rotationsfrei gehalten ist, dadurch gekennzeichnet, daß das Antriebsrad (2) konzentrisch auf der Antriebswelle (1) angeordnet und mit nach außen gerichteten Übertragungselementen versehen ist, und daß mindestens ein in die Übertragungselemente des Antriebsrades (2) und des Zwischenringes (9) eingreifendes Planetenrad (5) vorgesehen ist, das über den Umfang des Abtriebsrades (14) nach außen vorsteht.

2. Untersetzungsgetriebe nach Anspruch 1, dadurch gekennzeichnet, daß zwei Planetenräder (5) vorgesehen sind, die symmetrisch zum gemeinsamen Radius des Antriebsrades (2) und des Zwischenringes (9) angeordnet sind.

3. Untersetzungsgetriebe nach Anspruch 1, dadurch gekennzeichnet, daß die beiden Planetenräder (5) in einem Winkel von etwa 60° beiderseits des gemeinsamen Radius angeordnet sind.

4. Untersetzungsgetriebe nach Anspruch 1, dadurch gekennzeichnet, daß die beiden Planetenräder (5) einander diametral gegenüberliegend vorgesehen sind.

5. Untersetzungsgetriebe nach einem der Ansprüche 1 bis 4, dadurch gekennzeichnet, daß das Antriebsrad (2) und der Zwischenring (9) U- oder V-förmige Nuten (3,10) aufweisen, und jedes Planetenrad (5) einen in die Nuten (3,10) eingreifenden Umfangssteg (6) aufweist.

6. Untersetzungsgetriebe nach einem der Ansprüche 1 bis 4, dadurch gekennzeichnet, daß alle Übertragungselemente Verzahnungen (4,7,11,12,15) aufweisen.

7. Untersetzungsgetriebe nach Anspruch 6, dadurch gekennzeichnet, daß die Verzahnungen (4,11,12) des Antriebsrades (2) und des Zwischenringes (9) durch geschlossene Rollenketten gebildet sind, und daß das Abtriebsrad (14) sowie jedes Planetenrad (5) als Kettenzahnräder ausgebildet sind.
